# EUROPEAN PATENT SPECIFICATION

(11) **EP 2 239 518 B1**
(45) Date of publication and mention of the grant of the patent: **02.05.2018**
(21) Application number: 10001671.6
(22) Date of filing: 18.02.2010
(51) Int. Cl.: F24F 11/00

(54) **Air-conditioning apparatus**
Klimaanlage
Appareil de climatisation

(30) Priority: 09.03.2009 JP 2009054969
(43) Date of publication of application: 13.10.2010
(73) Proprietor: Mitsubishi Electric Corporation, Chiyoda-ku Tokyo 100-8310 (JP)
(72) Inventor: Wakuta, Naoki, Tokyo 100-8310 (JP); Aoki, Masanori, Tokyo 100-8310 (JP); Shiba, Hiroaki, Tokyo 100-8310 (JP)
(74) Representative: Pfenning, Meinig & Partner mbB

(56) References cited:
- WO-A1-2008/004515
- WO-A1-2008/007586
- JP-A- 2004 156 829
- JP-A- 2004 301 436
- US-A1- 2006 001 391

## Description

### Technical Field

The present invention relates to an air-conditioning apparatus.

### Background Art

In the related art, for example, "a part replacement timing estimation device (4) comprising a storage (41) configured to store past data indicating a past transition of parameters (X, Y) which affect a replacement timing of parts (66a, 66b, 72, 78) which constitute equipment (2a, 2b), and an estimation unit (41) configured to estimate the replacement timing using the past data as future data indicating a transition of the parameters (X, Y) from the present" is proposed (for examples, see Patent Document 1).

Also, "an abnormal prediction system (1) for equipment comprising: equipment (2a, 2b, 2c); a storage (41) configured to store state data indicating the state of the equipment (2a, 2b, 2c); a normal model generator (43) configured to generate a normal model for estimating the state data in an normal state from normal data indicating the state of the equipment (2a, 2b, 2c) in the normal state from the state data in the past stored in the storage (41); a deterioration model generator (44) configured to generate a deterioration model for estimating the state data in an abnormal state from deterioration data indicating the state of the equipment (2a, 2b, 2c) in the abnormal state from the state data in the past stored in the storage (41); and an abnormal predictor (45) configured to predict occurrence of abnormality in the equipment (2a, 2b, 2c) on the basis of a degree of divergence between measured data as the measured state data and estimated normal data derived from the normal model and a degree of conformity between estimated deterioration data derived from the deterioration model and the measured data" is proposed (for example, see Patent Document 2).

Patent Document 3 discloses an air conditioner comprising an indoor unit and an outdoor unit, the indoor unit storing summed operation time from the initial time of starting energization of the indoor unit. The indoor unit sends the summed operation time to the outdoor unit, which receives the electric power from the indoor unit, and the summed operation time is stored in a nonvolatile outdoor storage part at the occurrence of abnormality in the outdoor unit.

### Cited References

### Patent Literature

[Patent Document 1] JP-A-2004-340549 (Claim 1)
[Patent Document 2] JP-A-2006-343063 (Claim 1)
[Patent Document 3] JP-A-2004-156829

### Summary of Invention

### Technical Problem

In the related art, there is a problem that a state in which a breakdown or lowering of an energy-saving efficiency in association with deterioration with age is occurred (hereinafter, referred to also as "abnormal state") or a state which is susceptible to the occurrence of the breakdown or the lowering of the energy-saving efficiency in association with the deterioration with age (hereinafter, referred to also as "symptom of abnormality") cannot be detected with high degree of accuracy.

Therefore, there is a problem such that an accident due to the breakdown or the lowering of the energy-saving efficiency in an end stage of product life cannot be prevented before it happens.

In order to solve the problems described above, the invention is intended to provide an air-conditioning apparatus which is able to prevent an accident due to a breakdown or lowering of an energy-saving efficiency in an end stage of product life before occurrence by detecting a state in which the breakdown or the lowering of the energy-saving efficiency in association with deterioration with age is occurred, or a state which is susceptible to the occurrence of the breakdown or the lowering of the energy-saving efficiency in association with the deterioration with age.

### Solution to Problem

An air-conditioning apparatus according to the invention comprises the features of claim 1.

### Advantageous Effect of the Invention

According to the invention, since the stored operating-state data in the storage and the current operating-state data are compared to detect the abnormal state or the symptom of abnormality of the air-conditioning apparatus, the accident due to a breakdown or lowering of an energy-saving efficiency in an end stage of product life may be provided before occurrence by detecting a state in which the breakdown or the lowering of the energy-saving efficiency in association with deterioration with age is occurred, or a state which is susceptible to the occurrence of the breakdown or the lowering of the energy-saving efficiency in association with the deterioration with age.

### Brief Description of Drawings

Fig. 1 is a refrigerant circuit diagram schematically showing an air-conditioning apparatus according to Example 1.
Fig. 2 is a drawing showing a configuration of an operation control unit 100 according to Example 1.
Fig. 3 is an explanatory drawing showing a collection of operating-state data according to Example 1.
Fig. 4 is an explanatory drawing showing an occurrence of an accident due to a breakdown in an end stage of product life.

### Description of Embodiments

### Example 1

### (Configuration)

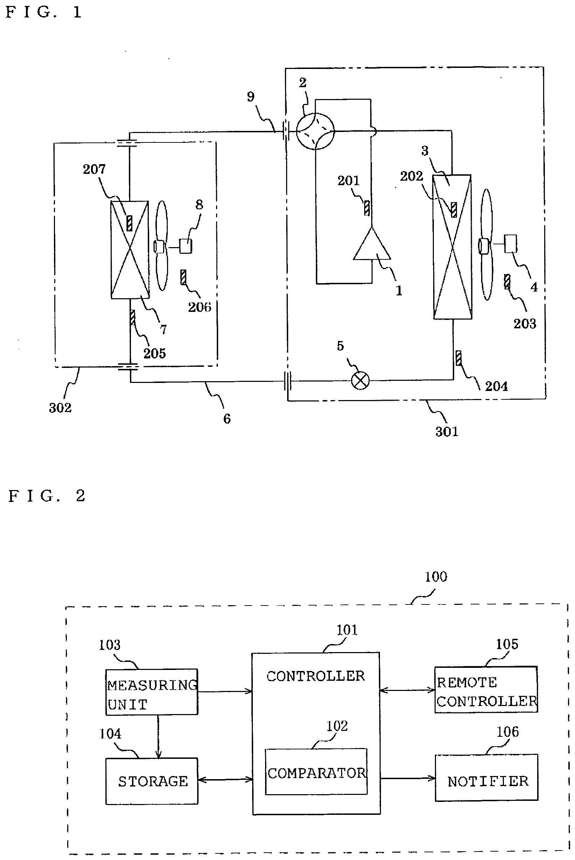

Fig. 1 is a refrigerant circuit diagram schematically showing an air-conditioning apparatus according to Example 1.

As shown in Fig. 1, the air-conditioning apparatus according to Example 1 includes an outdoor unit 301 and an indoor unit 302.

The air-conditioning apparatus is an apparatus used for cooling and heating an indoor by performing a refrigerating cycle operation of a thermo-compression type.

### <Indoor Blower>

The indoor unit 302 is installed on an indoor ceiling by embedding, hanging, or the like, or is installed on an indoor wall surface by wall hanging or the like and is connected to the outdoor unit 301 via liquid connection piping 6 and gas connection piping 9 to constitute a part of a refrigerant circuit.

Hereinafter, a detailed configuration of the indoor unit 302 will be described.

The indoor unit 302 includes an indoor heat exchanger 7 as a user-side heat exchanger and an indoor air blower 8.

The indoor heat exchanger 7 is made up of, for example, a fin-and-tube type heat exchanger of a cross-fin system including a heat transmitting pipe and a number of fins.

The indoor heat exchanger 7 functions as an evaporator of a refrigerant to cool air in a room during a cooling operation, and functions as a condenser for the refrigerant to heat the air in the room during a heating operation.

The indoor air blower 8 is provided in conjunction with the indoor heat exchanger 7, and includes a fan which is able to vary the flow rate of air to be supplied to the indoor heat exchanger 7, for example, a centrifugal fan or a multi-vane fan driven by a DC fan motor (not shown).

The indoor air blower 8 has a function to intake air in the room into the indoor unit 302, and supply air heat-exchanged with the refrigerant by the indoor heat exchanger 7 into the room as supply air.

The indoor unit 302 includes various sensors installed therein.

In other words, a liquid-side temperature sensor 205 is installed to detect the temperature of the refrigerant in a liquid state or a gas-liquid two-phase state on the side of liquid of the indoor heat exchanger 7.

The indoor heat exchanger 7 is also provided with a gas-side temperature sensor 207 configured to detect the temperature of the refrigerant in the gas-liquid two-phase state.

In addition, the indoor unit 302 is provided with an indoor temperature sensor 206 configured to detect the temperature of the indoor air flowing into the indoor unit 302 (intake air temperature) on the side of an intake port for taking the indoor air.

The indoor unit 302 may also be provided with the indoor temperature sensor 206 on the side of a blowing port for the room air to detect the temperature of the room air discharged from the interior of the indoor unit 302 (blow-out air temperature).

The liquid-side temperature sensor 205, the gas-side temperature sensor 207, and the indoor temperature sensor 206 are made up of, for example, a thermister.

The indoor air blower 8 is controlled by an operation control unit 100 (described later) according to detected values of these sensors.

### <Outdoor Blower>

The outdoor unit 301 is installed outdoors, and is connected to the indoor unit 302 via the liquid connection piping 6 and the gas connection piping 9, to constitute a part of the refrigerant circuit.

Hereinafter, a detailed configuration of the outdoor unit 301 will be described.

The outdoor unit 301 includes a compressor 1, a four-way valve 2, an outdoor heat exchanger 3 as a heat-source-side heat exchanger, an outdoor air blower 4, and an expansion valve 5.

The expansion valve 5 is connected to and arranged on the liquid side of the outdoor unit 301.

The expansion valve 5 is variable in opening of an aperture, and adjusts the flow rate of the refrigerant flowing in the refrigerant circuit.

The compressor 1 is able to vary an operating capacity and, for example, a capacity compressor driven by a motor (not shown) controlled by an inverter is used.

The compressor 1 is controlled by a controller 101.

For example, it is controlled according to a deviation of the set temperature (target value) between the indoor temperature sensor 206 of the indoor heat exchanger 7 and a remote controller 105, described later.

In Example 1, a case in which one piece of the compressor 1 is provided is described. However, the invention is not limited thereto, and two or more of the compressors 1 may be connected in parallel according to the number of the connected indoor blowers 302.

The four-way valve 2 is a valve configured to switch the direction of flow of the refrigerant.

The four-way valve 2 has a function to connect a discharge side of the compressor 1 and a gas side of the outdoor heat exchanger 3 and switch a refrigerant flow channel so as to connect the intake side of the compressor 1 and the gas connection piping 9 side (see broken lines of the four-way valve 2 in Fig. 1) during the cooling operation.

Accordingly, the outdoor heat exchanger 3 is functioned as a condenser for the refrigerant compressed in the compressor 1 and the indoor heat exchanger 7 is functioned as an evaporator for the refrigerant to be condensed in the outdoor heat exchanger 3.

The four-way valve 2 has a function to switch the refrigerant flow channel so as to connect a discharge side of the compressor 1 and the gas connection piping 9 side and connect the intake side of the compressor 1 and the gas side of the outdoor heat exchanger 3 (see solid lines of the four-way valve 2 in Fig. 1) during the heating operation.

Accordingly, the indoor heat exchanger 7 is functioned as a condenser for the refrigerant compressed in the compressor 1, and the outdoor heat exchanger 3 is functioned as an evaporator for the refrigerant to be condensed in the indoor heat exchanger 7.

The outdoor heat exchanger 3 is made up of, for example, a fin-and-tube type heat exchanger of a cross-fin system including a heat transmitting pipe and a number of fins.

The outdoor heat exchanger 3 being connected to the four-way valve 2 at the gas side thereof and to the liquid connection piping 6 at the liquid side thereof, functions as the condenser of the refrigerant during the cooling operation and functions as the evaporator of the refrigerant during the heating operation.

The outdoor air blower 4 is provided in conjunction with the outdoor heat exchanger 3, and includes a fan which is able to vary the flow rate of air to be supplied to the outdoor heat exchanger 3, for example, a propeller fan driven by a DC fan motor (not shown).

The outdoor air blower 4 has a function to intake outdoor air into the outdoor unit 301 and discharge air heat-exchanged with the refrigerant by the outdoor heat exchanger 3 out the room.

The outdoor unit 301 includes various sensors stored therein.

In other words, the compressor 1 is provided with the discharge temperature sensor 201 configured to detect a discharge temperature.

The outdoor heat exchanger 3 is provided with the gas-side temperature sensor 202 configured to detect the temperature of the refrigerant in the gas-liquid two-phase state (the condensing temperature during the cooling operation and the evaporation temperature during the heating operation).

In addition, the outdoor heat exchanger 3 is provided with a liquid-side temperature sensor 204 configured to detect the temperature of the refrigerant in the liquid state or the gas-liquid two-phase state on the side of liquid.

The outdoor unit 301 is provided with an outdoor temperature sensor 203 configured to detect the temperature of the outdoor air flowing into the outdoor unit 301, that is, the outside air temperature on the side of an intake port for taking the outside air.

The compressor 1, the four-way valve 2, the outdoor air blower 4, and the expansion valve 5 are controlled by the operation control unit 100 (described later) according to the detected values of these sensors.

### <Control System>

Fig. 2 is a drawing showing a configuration of the operation control unit 100 according to Example 1.

As shown in Fig. 2, the air-conditioning apparatus includes the operation control unit 100.

The operation control unit 100 includes the controller 101, a measuring unit 103, a storage 104, the remote controller 105, and a notifier 106.

The controller 101 includes a comparator 102.

The remote controller 105 is configured to set a set value of the blow-out air temperature of the indoor unit 302, and a set air quantity of the indoor air blower 8, an operation mode, and the like on the basis of the operation by a user, for example.

The remote controller 105 includes, for example, a liquid crystal display unit, receives information from the controller 101, and displays the information.

The measuring unit 103 is configured to acquire the operating-state data of the air-conditioning apparatus.

The measuring unit 103 acquires at least one of the temperature of the outside air flowing into the outdoor unit 301, the temperature of the indoor air flowing into the indoor unit 302, the operation mode, the set temperature, the set air volume of the indoor air blower 8, the refrigerant discharge temperature of the compressor 1, the operating capacity of the compressor 1, the opening of the expansion valve 5 as the operating-state data.

The measuring unit 103 may be configured to acquire at least one of the numbers of revolutions of the outdoor air blower 4 and the indoor air blower 8 and a current to be supplied to a drive motor for driving the compressor 1, the outdoor air blower 4, and the indoor air blower 8 as the operating-state data in addition to the items described above.

The measuring unit 103 supplies information about the acquired operation data to the controller 101.

The controller 101 controls at least one of the operating capacity of the compressor 1, the air quantity of the outdoor air blower 4, the air quantity of the indoor air blower 8, and the opening of the expansion valve 5 on the basis of the operating-state data.

The controller 101 controls the respective components so as to fall within desired control target ranges on the basis of the set temperature or the set air quantity supplied, for example, the remote controller 105.

The controller 101 stores the information about the operating-state data in the storage 104 when the operating-state data satisfies predetermined conditions. Detailed description will be given later.

The comparator 102 of the controller 101 compares the operating-state data stored in the storage 104 with the current operating-state data and detects an abnormal state or a symptom of abnormality of the air-conditioning apparatus.

The storage 104 is made up of, for example, a storage device such as a flash memory.

The storage 104 is configured to store the operating-state data.

The storage 104 is also configured to store a predetermined threshold value (described later) for determining the abnormal state or the symptom of abnormality in advance.

The notifier 106 may be made up of a buzzer, a speaker, an LED, a liquid crystal panel, and so on.

The notifier 106 notifies the abnormal state or the symptom of abnormality by an instruction from the controller 101.

The notifier 106 corresponds to a "notifying unit" in the invention.

The configuration of the air-conditioning apparatus in Example 1 has been described thus far.

Subsequently, an operation of the air-conditioning apparatus in Example will be described.

### (Operation)

Operations of the respective members in the cooling operation and the heating operation will be described.

### <Cooling Operation>

Referring now to Fig. 1, the cooling operation will be described.

During the cooling operation, the four-way valve 2 sets the refrigerant flow channel in a state indicated by the broken lines in Fig. 1.

In other words, a state in which the discharge side of the compressor 1 is connected to the gas side of the outdoor heat exchanger 3, and the intake side of the compressor 1 is connected to the gas side of the indoor heat exchanger 7 is assumed.

The expansion valve 5 is adjusted in opening so that the degree of excessive heating of the refrigerant on the intake side of the compressor 1 becomes a predetermined value.

The degree of excessive heating of the refrigerant in the intake side of the compressor 1 is obtained by subtracting the evaporation temperature of the refrigerant detected by the gas-side temperature sensor 207 from the compressor intake temperature for example.

Here, the compressor intake temperature is calculated by converting the evaporation temperature of the refrigerant detected by the gas-side temperature sensor 207 into a low saturation pressure, converting the condensing temperature of the refrigerant detected by the gas-side temperature sensor 202 into a high saturation pressure, and assuming that the compression process of the compressor 1 is a polytropic change on the basis of the discharge temperature of the refrigerant detected by the discharge temperature sensor 201 of the compressor 1.

When the compressor 1, the outdoor air blower 4, and the indoor air blower 8 are activated in this state of refrigerant circuit, a low-pressure gas refrigerant is taken into the compressor 1, is compressed therein, and becomes a high-pressure gas refrigerant.

Then, the high-pressure gas refrigerant is fed to the outdoor heat exchanger 3 via the four-way valve 2, is condensed by heat exchanging with the outside air supplied by the outdoor air blower 4, and becomes a high-pressure liquid refrigerant.

Then, the high-pressure liquid refrigerant becomes a low-temperature low-pressure gas-liquid two-phase refrigerant by being depressurized by the expansion valve 5, is fed to the indoor unit 302 via the liquid connection piping 6, is evaporated by heat exchanging with the room air by the indoor heat exchanger 7, and becomes a low-pressure gas.

Here, since the expansion valve 5 controls the flow rate of the refrigerant flowing in the indoor heat exchanger 7 so that the degree of excessive heating in the intake side of the compressor 1 becomes the predetermined value, the low-pressure gas refrigerant evaporated in the indoor heat exchanger 7 has a predetermined degree of excessive heating.

In this manner, the refrigerant of a flow rate according to the operating load required in the air-conditioning space in which the indoor unit 302 is installed flows in each indoor heat exchanger 7.

The low-pressure gas refrigerant is fed to the outdoor unit 301 via the gas connection piping 9, and is taken into the compressor 1 again via the four-way valve 2.

### <Heating Operation>

Referring now to Fig. 1, the heating operation will be described.

During the heating operation, the four-way valve 2 sets a state indicated by the solid lines in Fig. 1.

In other words, a state in which the discharge side of the compressor 1 is connected to the gas side of the indoor heat exchanger 7, and the intake side of the compressor 1 is connected to the gas side of the outdoor heat exchanger 3 is assumed.

The expansion valve 5 is adjusted in opening so that the degree of excessive heating of the refrigerant on the intake side of the compressor 1 has the predetermined value.

The degree of excessive heating of the refrigerant in the intake side of the compressor 1 is obtained by subtracting the evaporation temperature of the refrigerant detected by the gas-side temperature sensor 202 from the compressor intake temperature, for example.

Here, the compressor intake temperature is calculated by converting the evaporation temperature of the refrigerant detected by the gas-side temperature sensor 202 into the low saturation pressure, converting the condensing temperature of the refrigerant detected by the gas-side temperature sensor 207 into the high saturation pressure, and assuming that the compression process of the compressor 1 is the polytropic change on the basis of the discharge temperature of the refrigerant detected by the discharge temperature sensor 201 of the compressor 1.

When the compressor 1, the outdoor air blower 4, and the indoor air blower 8 are activated in this state of the refrigerant circuit, the low-pressure gas refrigerant is taken into the compressor 1, is compressed therein, becomes the high-pressure gas refrigerant, and is fed to the indoor unit 302 via the four-way valve 2 and the gas connection piping 9.

Then, the high-pressure gas refrigerant fed to the indoor unit 302 becomes the high-pressure liquid refrigerant by being condensed by heat-exchanging with the room air in the indoor heat exchanger 7, then is depressurized by the expansion valve 5 via the liquid connection piping 6, and becomes a low-pressure refrigerant in the gas-liquid two-phase state.

Here, since the expansion valve 5 controls the flow rate of the refrigerant flowing in the indoor heat exchanger 7 so that the degree of excessive heating in the intake side of the compressor 1 has the predetermined value, the condensed high-pressure liquid refrigerant in the indoor heat exchanger 7 has a predetermined degree of excessive cooling.

In this manner, the refrigerant of a flow rate according to the operating load required in the air-conditioning space in which the indoor unit 302 is installed flows in the indoor heat exchanger 7.

The low-pressure refrigerant in the gas-liquid two-phase state flows into the outdoor heat exchanger 3 of the outdoor unit 301.

Then, the low-pressure refrigerant in the gas-liquid two-phase state flowed into the outdoor heat exchanger 3 becomes the low-pressure gas refrigerant by being condensed by heat exchanging with the outside air supplied by the outdoor air blower 4, and taken into the compressor 1 again via the four-way valve 2.

In this manner, the operating process including the cooling operation and the heating operation is performed by the operation control unit 100.

Although the pressure at the high pressure and the pressure at the low pressure are calculated by the conversion with the condensing temperature and the evaporation temperature of the refrigerant here, it is also possible to add pressure sensors on the intake side and the discharge side of the compressor 1 in addition to the configuration shown in Fig. 1 and obtain the pressures directly.

It is also possible to provide an intake pressure sensor and an intake temperature sensor on the intake side of the compressor 1 in addition to the configuration of Fig. 1 and detect the degree of excessive heating of the refrigerant from values therefrom.

In other words, the intake pressure of the compressor 1 detected by the intake pressure sensor is converted into the saturation temperature value corresponding to the evaporation temperature, and the saturation temperature value of the refrigerant is subtracted from the refrigerant temperature value detected by the intake temperature sensor to detect the degree of excessive heating of the refrigerant.

### <Collection of Operating-State Data>

Subsequently, an operating-state data collecting operation will be described.

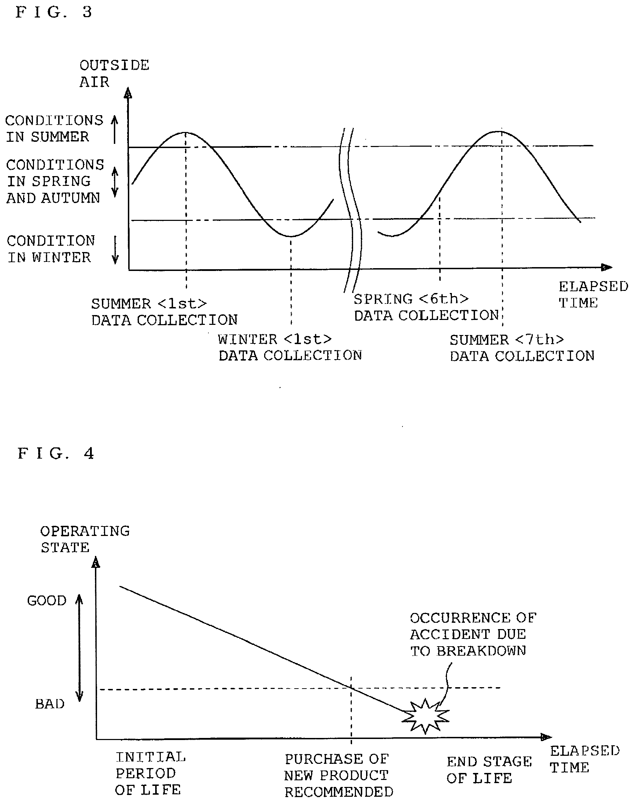

Fig. 3 is an explanatory drawing showing a collection of operating-state data according to Example 1.

Fig. 3 shows a data collection which is performed every season while determining four seasons in a case where the air-conditioning apparatus is installed in Japan.

First of all, the controller 101 determines the current season in the site of installation of the air-conditioning apparatus on the basis of at least the temperature of the outside air flowing into the outdoor unit 301, the operating capacity of the compressor 1, and the operating mode of the air-conditioning apparatus.

For example, as conditions for determining the summer, when the outside temperature is 30°C or higher, the operating mode is "cooling", and the operation of the compressor 1 continues for a predetermined time or longer, the current season is determined to be the summer.

In the same manner, the current season is determined on the basis of predetermined conditions for determining the autumn, the winter, and the spring.

The predetermined conditions for determining the seasons are not limited to the above-described operating-state data and, for example, may be set as needed such as an average value of the set temperature for a predetermined period or a difference between the outside temperature and the set temperature.

The predetermined conditions for determining the seasons may be set as needed according to the site of installation of the air-conditioning apparatus. For example, in regions having tropical climate, conditions for determining the rain season and the dry season may be set.

Next, when information about the operating-state data in the corresponding season is not stored in the storage 104, the controller 101 stores the information about the current operating-state data together with the information for identifying the season.

When the elapse of the season cycle is determined and it is found that the information about the operating-state data in the corresponding season in the corresponding cycle is not stored in the storage 104, the controller 101 stores information about the current operating-state data in the storage 104 together with the corresponding cycle number and the information for identifying the season.

As the information for identifying the season here, in Japan, for example, signs for identifying the spring, the summer, the autumn and the winter may be set.

As the information for identifying the number of cyclers, for example, numerical values which indicate the elapsed years may be set.

For example, in Fig. 3, when the current season is determined to be the summer for the first time when the operation of the air-conditioning apparatus is started, the controller 101 confirms whether the operating-state data including the identification information "one year" as the elapsed year, and "summer" as the season is stored in the storage 104.

Here, since the data of the corresponding season of the corresponding cycle is not stored, the controller 101 stores the information about the operating-state data acquired by the measuring unit 103 in the storage 104.

At this time, information for identifying "first year" as the number of cycles and "summer" as the season is added to the operating-state data.

From then on, the operating-state data is collected for the respective seasons of the respective years in the same manner.

It is also applicable to store only representative data when the predetermined conditions for determining the season are satisfied in the same season of the same year for a plurality of times.

For example, the operating-state data having the largest difference between a control command value and a track record value from among data which satisfy the predetermined conditions may be stored as the representative data.

It is also possible to store the information such as abnormality history or communication data in addition to the operating-state data described above.

It is also possible to store only parameters which affect the time of replacement of parts which constitute the air-conditioning apparatus as the operating-state data to be stored.

In this manner, the collection of the operating-state data is performed every season in the cycle of the seasons in a year.

Accordingly, it is not necessary to store all the past operation data required for detecting the abnormal state or the symptom of abnormality, and hence reduction of quantity of data to be stored in the storage 104 is achieved.

### <Detection of Abnormality and Symptom of Abnormality>

Subsequently, an operation to detect the abnormal state or the symptom of abnormality of the air-conditioning apparatus will be described.

Fig. 4 is an explanatory drawing showing an occurrence of an accident due to a breakdown in an end stage of a product life.

As shown in Fig. 4, the air-conditioning apparatus is subject to the breakdown in association with the deterioration with age or the lowering of the energy-saving efficiency with age (the operating state becomes worse).

It is important to prevent an accident due to the breakdown in the end state of product life by predicting the deterioration of the operating state as such before occurrence.

The controller 101 in Example 1 detects a state which is susceptible to occurrence of the breakdown in association with the deterioration with age or the lowering of the energy-saving efficiency (hereinafter, referred to as the symptom of abnormality).

The controller 101 also detects a state in which the breakdown in association with the deterioration with age and the lowering of the energy-saving efficiency has occurred (hereinafter, referred to as the abnormal state).

First of all, the comparator 102 of the controller 101 compares the past operating-state data corresponding to the current season stored in the storage 104 with the current operating-state data and detects an abnormal state or a symptom of abnormality of the air-conditioning apparatus.

In the detection of the abnormal state, the comparator 102 of the controller 101 detects an abnormal state of the air-conditioning apparatus when the difference between the operating-state data stored in the storage 104 and the current operating-state data exceeds a predetermined threshold value.

In the detection of the symptom of abnormality, the comparator 102 of the controller 101 detects the symptom of abnormality when the current operating-state data is within the normal operating-state data and the difference between the operating-state data stored in the storage 104 and the current operating-state data exceeds the predetermined threshold value.

Here, comparison between the operating-state data stored in the storage 104 and the current operating-state data is performed by comparing the difference between the difference between the control command value in the past and the track record value and the difference between the control command value in the present and the track record value.

Although the abnormal state and the symptom of abnormality are detected using the predetermined threshold value stored in advance in the storage 104 in the description given above, the invention is not limited thereto, and the controller 101 may be configured to obtain an integrated value of the operating time of the air-conditioning apparatus and change the predetermined threshold valve according to the integrated value of the operating time.

For example, it is also possible to prepare data of the threshold value corresponding to the integrated time in the storage 104 as a table, and heighten the predetermined threshold value (to the value which makes determination of the abnormality easy) with increase of the integrated time of operation.

### <Notification to User>

Subsequently, an operation to notify the result of detection of the abnormal state or the symptom of abnormality will be described.

When the controller 101 senses the abnormal state or the symptom of abnormality by the operation described above, the controller 101 causes one or both of the notifier 106 and the remote controller 105 to notify the abnormal state or the symptom of abnormality.

The notification by the notifier 106 will be described.

When detecting the abnormal state or the symptom of abnormality by the operation described above, the controller 101 causes the notifier 106 to notify the abnormal state or the symptom of abnormality.

For example, a red light is illuminated by an LED in the case of the abnormal state, and a yellow light is illuminated in the case where the symptom of abnormality is detected. Also, for example, information about the detected contents may be displayed on a liquid crystal panel. Alternatively, different buzzer sounds may be made for the abnormal state and the symptom of abnormality to notify the user.

The controller 101 may be configured to detect the frequency of operation of the air-conditioning apparatus in a unit period, and cause the notifier 106 to notify the abnormal state or the symptom of abnormality when the frequency of operation is lower than a predetermined frequency.

The operation frequency may be obtained, for example, by the thermometer ON/OFF time, the number of times of thermometer ON/OFF, the integrated time, the operation frequency of the drive motor of the compressor 1 per unit period.

In this manner, it may be configured to perform the notification when the frequency of utilization of the air-conditioning apparatus is low but not when the frequency of utilization of the air-conditioning apparatus is high.

Accordingly, for example, the maintenance or replacement of the apparatus may be encouraged in a period when the operating frequency is low, so that the probability to be incapable of air conditioning in a period when the frequency of utilization of the air-conditioning apparatus is high is reduced, and the convenience and comfort of the user are improved.

Subsequently, the notification by the remote controller 105 will be described.

A countermeasure for the abnormal states relating to the various operating-state data to be taken by the user, information about the effect on the operation relating to the symptom of abnormality are set in advance in the storage 104.

As the countermeasure for the abnormal state to be taken by the user, for example, information including such information saying that the apparatus needs to be replaced due to the product life (recommendation of purchase of a new product) or the like is set. Alternately, information about the contents of the process for avoiding the abnormality, for example, is set therein.

As the effect on the operation with respect to the symptom of abnormality, for example, information saying that the cooling and heating capability is lowered, or the energy-saving efficiency is lowered even though the operation is within a normal range is set. Alternatively, information saying that the time to purchase a new product is approaching is set.

It is also possible to store information about code numbers according to the contents of abnormality instead of the information described above.

When the abnormal state or the symptom of abnormality is detected by the operation described above, the controller 101 transmits predetermined information set in advance according to the operating-state data from which the abnormal state or the symptom of abnormality is detected to the remote controller 105.

The remote controller 105 receives the information from the controller 101, and displays the information about, for example, on the liquid crystal panel.

It is also possible to set operating-state data which is needed to be disclosed to the user from among the various operating-state data from which the abnormal state or the symptom of abnormality is detected in advance, and notify only the abnormal state or the like of the corresponding operating-state data.

### (Advantages)

As described above, in Example 1, since the past operating-state data and the current operating-state data are compared to detect the abnormal state or the symptom of abnormality of the air-conditioning apparatus, the accident due to a breakdown or lowering of an energy-saving efficiency in an end stage of product life may be prevented before occurrence by detecting a state in which the breakdown or the lowering of the energy-saving efficiency in association with deterioration with age is occurred, or a state which is susceptible to the occurrence of the breakdown or the lowering of the energy-saving efficiency in association with the deterioration with age.

Also, the current season in the site of installation of the air-conditioning apparatus is determined and the current operating-state data is stored in the storage 104 together with the information for identifying the season.

Accordingly, it is not necessary to store all the past operation data required for detecting the abnormal state or the symptom of abnormality, and hence reduction of quantity of data to be stored in the storage 104 is achieved.

Also, the elapse of the cycle of seasons is determined and the information of the current operating-state data is stored in the storage 104 together with the corresponding number of cycle and the information for identifying the season.

Therefore, reduction of the quantity of data to be stored in the storage 104 is achieved while collecting the operating-state data for every season in every year and the operating-state data for a plurality of years.

Also, the past operating-state data corresponding to the current season stored in the storage 104 is compared with the current operating-state data and an abnormal state or a symptom of abnormality of the air-conditioning apparatus is detected.

Therefore, the past operating-state data similar to the current operating state is compared with the current operating-state data, and the abnormal state or the symptom of abnormality is detected with high degree of accuracy.

Also, the predetermined threshold value is changed according to the integrated value of the operating time.

Therefore, probability of breakdown and the state of lowering of the energy-saving efficiency due to the deterioration with age are detected with higher degree of accuracy.

When the frequency of operation of the air-conditioning apparatus is lower than the predetermined frequency, the abnormal state or the symptom of abnormality is notified.

Therefore, it may be configured to perform the notification when the frequency of utilization of the air-conditioning apparatus is low but not when the frequency of utilization of the air-conditioning apparatus is high.

Therefore, the maintenance or the replacement of the apparatus may be encouraged in a period when the operating frequency is low, so that the probability to be incapable of air conditioning in a period when the frequency of utilization of the air-conditioning apparatus is high is reduced, and the convenience and comfort of the user are improved.

Also, when the abnormal state or the symptom of abnormality is detected, the remote controller 105 notifies the predetermined information set in advance according to the operating-state data that detected the abnormal state or the symptom of abnormality.

Accordingly, the countermeasure for the abnormal state to be taken by the user or the information about the effect on the operation for the symptom of abnormality may be notified to the user.

### Reference Sign List

1: compressor, 2: four-way valve, 3: outdoor heat exchanger, 4: outdoor air blower, 5: expansion valve, 6: liquid connection piping, 7: indoor heat exchanger, 8: indoor air blower, 9: gas connection piping, 100: operation control unit, 101: controller, 102: comparator, 103: measuring unit, 104: storage, 105: remote controller, 106: notifier, 201: discharge temperature sensor, 202: gas-side temperature sensor, 203: outdoor temperature sensor, 204: liquid-side temperature sensor, 205: liquid-side temperature sensor, 206: indoor temperature sensor, 207: gas-side temperature sensor, 301: outdoor unit, 302: indoor unit

## Claims

1. An air-conditioning apparatus including an outdoor unit (301) having a compressor (1), an expansion valve (5), a heat-source-side heat exchanger (3), and an outdoor air blower (4) configured to blow air to the heat-source-side heat exchanger (3), and an indoor unit (302) having a user-side heat exchanger (7) and an indoor air blower (8) configured to blow air to the user-side heat exchanger (7), comprising:
a measuring unit (103) configured to acquire operating-state data of the air-conditioning apparatus;
a controller (101) configured to control at least one of the operating capacity of the compressor (1), the air volume of the outdoor air blower (4), the air volume of the indoor air blower (8), and the opening of the expansion valve (5) on the basis of the operating-state data; and
a storage (104) for storing the operating-state data,
wherein
the measuring unit (103) acquires the outside air temperature flowing into the outdoor unit (301), the operating capacity of the compressor (1), and the operation mode as the operating-state data,
the controller (101) determines a current season in the site of installation of the air-conditioning apparatus and the elapse of the season cycle on the basis of at least the temperature of the outside air flowing into the outdoor unit (301), the operating capacity of the compressor (1), and the operating mode of the air-conditioning apparatus,
stores information about the current operating-state data in the storage (104) together with the number of the corresponding cycle and the information for identifying the season when it is found that the information about the operating-state data in the corresponding season in the corresponding cycle is not stored in the storage (104), and
compares the operating-state data in the past season corresponding to the current season stored in the storage (104) with current operating-state data and detects an abnormal state or a symptom of abnormality of the air-conditioning apparatus.

2. The air-conditioning apparatus of Claim 1, wherein the measuring unit (103) further acquires at least one of the indoor air temperature flowing into the indoor unit (302), the set temperature, the set air volume of the indoor air blower (8), the refrigerant discharge temperature of the compressor (1), and the opening of the expansion valve (5) as the operating-state data.

3. The air-conditioning apparatus of any one of claim 1 or 2, wherein the controller (101)
detects the abnormal state of the air-conditioning apparatus when the difference between the operating-state data stored in the storage (104) and the current operating-state data exceeds a predetermined threshold value.

4. The air-conditioning apparatus of any one of Claims 1 to 3, wherein the controller (101)
detects the symptom of abnormality when the current operating-state data is within a range of a normal operating-state, and the difference between the operating-state data stored in the storage (104) and the current operating-state data exceeds the predetermined threshold value.

5. The air-conditioning apparatus of Claim 3 or 4, wherein the controller (101)
obtains an integrated value of an operating time of the air-conditioning apparatus and changes the predetermined threshold value according to the integrated value of the operating time.

6. The air-conditioning apparatus of any one of Claims 1 to 5, comprising notifying means (106) configured to notify the abnormal state or the symptom of abnormality.

7. The air-conditioning apparatus of Claim 6, wherein the controller (101)
detects a frequency of operation of the air-conditioning apparatus in a unit period, and causes the notifying means (106) to notify the abnormal state or the symptom of abnormality when the frequency of operation is lower than a predetermined frequency.

8. The air-conditioning apparatus of any one of Claims 1 to 7, comprising a remote controller (105) configured to receive information from the controller (101) and display the information, wherein
the controller (101)
transmits predetermined information set in advance according to the operating-state data in which the abnormal state or the symptom of abnormality is detected to the remote controller (105) when the abnormal state or the symptom of abnormality is detected.

9. The air-conditioning apparatus of Claim 8, wherein a countermeasure for the abnormal states to be taken by the user, or information about an effect of the symptom of abnormality on the operation are set as the predetermined information.

## Patentansprüche

1. Klimaanlage, umfassend eine Außeneinheit (301) aufweisend einen Verdichter (1), ein Expansionsventil (5), einen wärmequellenseitigen Wärmetauscher (3) und ein Außenluftgebläse (4), das eingerichtet ist, Luft zum wärmequellenseitigen Wärmetauscher (3) zu blasen, und eine Inneneinheit (302) aufweisend einen nutzungsseitigen Wärmetauscher (7) und ein Innenluftgebläse (8), das eingerichtet ist, Luft zum nutzungsseitigen Wärmetauscher (7) zu blasen,
umfassend
eine Messeinheit (103), die eingerichtet ist, Betriebszustandsdaten der Klimaanlage zu erwerben;
eine Steuerung (101), die eingerichtet ist, zumindest eines von der Betriebskapazität des Verdichters (1), von der Luftmenge des Außenluftgebläses (4), von der Luftmenge des Innenluftgebläses (8) und vom Öffnen des Expansionsventils (5) auf der Grundlage der Betriebszustandsdaten zu steuern; und
einen Speicher (104) zum Speichern der Betriebszustandsdaten, wobei
die Messeinheit (103) die Außenlufttemperatur, die in die Außeneinheit (301) hineinströmt, die Betriebskapazität des Verdichters (1) und den Betriebsmodus als die Betriebszustandsdaten erwirbt,
die Steuerung (101) eine aktuelle Jahreszeit an der Installationsstelle der Klimaanlage und den Ablauf des Jahreszeitenzyklus bestimmt auf der Grundlage von zumindest der Temperatur der Außenluft, die in die Außeneinheit (301) hineinströmt, der Betriebskapazität des Verdichters (1) und dem Betriebsmodus der Klimaanlage,
Informationen über die aktuellen Betriebszustandsdaten im Speicher (104) speichert zusammen mit der Nummer des entsprechenden Zyklus und den Informationen zum Identifizieren der Jahreszeit, wenn festgestellt wird, dass die Informationen über die Betriebszustandsdaten in der entsprechenden Jahreszeit im entsprechenden Zyklus im Speicher (104) nicht gespeichert sind und
die Betriebszustandsdaten aus der vergangenen Jahreszeit, die der im Speicher (104) gespeicherten aktuellen Jahreszeit entspricht, mit den aktuellen Betriebszustandsdaten vergleicht, und einen anormalen Zustand oder ein Anzeichen von Anormalität der Klimaanlage detektiert.

2. Klimaanlage nach Anspruch 1, wobei
die Messeinheit (103) ferner zumindest eines von der Innenlufttemperatur, die in die Inneneinheit (302) hineinströmt, der eingestellten Temperatur, der eingestellten Luftmenge des Innenluftgebläses (8), der Kältemittelauslasstemperatur des Verdichters (1) und dem Öffnen des Expansionsventils (5) als die Betriebszustandsdaten erwirbt.

3. Klimaanlage nach einem der Ansprüche 1 oder 2, wobei die Steuerung (101)
den anormalen Zustand der Klimaanlage detektiert, wenn die Differenz zwischen den im Speicher (104) gespeicherten Betriebszustandsdaten und den aktuellen Betriebszustandsdaten einen vorherbestimmten Schwellenwert überschreitet.

4. Klimaanlage nach einem der Ansprüche 1 bis 3, wobei die Steuerung (101)
das Anzeichen von Anormalität erfasst, wenn die aktuellen Betriebszustandsdaten innerhalb eines Bereichs eines normalen Betriebszustands liegen und die Differenz zwischen den im Speicher (104) gespeicherten Betriebszustandsdaten und den aktuellen Betriebszustandsdaten den vorherbestimmten Schwellenwert überschreitet.

5. Klimaanlage nach Anspruch 3 oder 4, wobei die Steuerung (101)
einen integrierten Wert einer Betriebsdauer der Klimaanlage erhält und den vorherbestimmten Schwellenwert entsprechend dem integrierten Wert der Betriebszeit ändert.

6. Klimaanlage nach einem der Ansprüche 1 bis 5, umfassend ein Meldemittel (106), das eingerichtet ist, den anormalen Zustand oder das Anzeichen von Anormalität zu melden.

7. Klimaanlage nach Anspruch 6, wobei die Steuerung (101)
eine Betriebsfrequenz der Klimaanlage in einer Einheitsdauer detektiert, und das Meldemittel (106) veranlasst, den anormalen Zustand oder das Anzeichen von Anormalität zu melden, wenn die Betriebsfrequenz geringer ist als eine vorherbestimmte Frequenz.

8. Klimaanlage nach einem der Ansprüche 1 bis 7, umfassend eine Fernsteuerung (105), die eingerichtet ist, Information von der Steuerung (101) zu empfangen und die Information anzuzeigen, wobei
die Steuerung (101)
vorherbestimmte Information, die entsprechend den Betriebszustandsdaten, in welchen der anormale Zustand oder das Anzeichen von Anormalität detektiert wird, voreingestellt ist, an die Fernsteuerung (105) übermittelt, wenn der anormale Zustand oder das Anzeichen von Anormalität detektiert wird.

9. Klimaanlage nach Anspruch 8, wobei eine vom Nutzer zu ergreifende Gegenmaßnahme für die anormalen Zustände oder Informationen über eine Auswirkung des Anzeichens von Anormalität auf den Betrieb als die vorherbestimmten Informationen eingestellt wird.

## Revendications

1. Appareil de climatisation comprenant une unité extérieure (301) ayant un compresseur (1), un détendeur (5), un échangeur de chaleur côté source de chaleur (3), et un souffleur d'air extérieur (4) configuré pour souffler de l'air sur l'échangeur de chaleur côté source de chaleur (3), et une unité intérieure (302) ayant un échangeur de chaleur côté utilisateur (7) et un souffleur d'air intérieur (8) configuré pour souffler de l'air sur l'échangeur de chaleur côté utilisateur (7), comprenant :
une unité de mesure (103) configurée pour acquérir des données d'état de fonctionnement de l'appareil de climatisation ;
une unité de commande (101) configurée pour commander au moins l'un de la capacité de fonctionnement du compresseur (1), du volume d'air du souffleur d'air extérieur (4), du volume d'air du souffleur d'air intérieur (8), et de l'ouverture du détendeur (5) sur la base des données d'état de fonctionnement ; et
une mémoire (104) pour mémoriser les données d'état de fonctionnement, dans lequel
l'unité de mesure (103) acquiert la température de l'air extérieur passant dans l'unité extérieure (301), la capacité de fonctionnement du compresseur (1), et le mode de fonctionnement en tant que données d'état de fonctionnement,
l'unité de commande (101) détermine une saison actuelle dans le site d'installation de l'appareil de climatisation et l'écoulement du cycle de saison sur la base d'au moins la température de l'air extérieur passant dans l'unité extérieure (301), la capacité de fonctionnement du compresseur (1) et le mode de fonctionnement de l'appareil de climatisation,
mémorise des informations sur les données d'état de fonctionnement actuelles dans la mémoire (104) en conjugaison avec le nombre du cycle correspondant et les informations pour identifier la saison lorsqu'il s'avère que les informations sur les données d'état de fonctionnement pendant la saison correspondante dans le cycle correspondant ne sont pas mémorisées dans la mémoire (104), et
compare les données d'état de fonctionnement pendant la saison passée correspondant à la saison actuelle mémorisées dans la mémoire (104) aux données d'état de fonctionnement actuelles et détecte un état anormal ou un symptôme d'anomalie de l'appareil de climatisation.

2. Appareil de climatisation selon la revendication 1, dans lequel l'unité de mesure (103) acquiert en outre au moins l'une de la température de l'air intérieur passant dans l'unité intérieure (302), de la température définie, du volume d'air défini du souffleur d'air intérieur (8), de la température de décharge d'agent réfrigérant du compresseur (1), et de l'ouverture du détendeur (5) en tant que données d'état de fonctionnement.

3. Appareil de climatisation selon l'une quelconque des revendications 1 ou 2, dans lequel l'unité de commande (101)
détecte l'état anormal de l'appareil de climatisation lorsque la différence entre les données d'état de fonctionnement mémorisées dans la mémoire (104) et les données d'état de fonctionnement actuelles dépasse une valeur de seuil prédéterminée.

4. Appareil de climatisation selon l'une quelconque des revendications 1 à 3, dans lequel l'unité de commande (101)
détecte le symptôme d'anomalie lorsque les données d'état de fonctionnement se trouvent dans une plage d'un état de fonctionnement normal, et la différence entre les données d'état de fonctionnement mémorisées dans la mémoire (104) et les données d'état de fonctionnement courantes dépasse la valeur de seuil prédéterminée.

5. Appareil de climatisation selon la revendication 3 ou 4, dans lequel l'unité de commande (101)
obtient une valeur intégrée d'un temps de fonctionnement de l'appareil de climatisation et change la valeur de seuil prédéterminée selon la valeur intégrée du temps de fonctionnement.

6. Appareil de climatisation selon l'une quelconque des revendications 1 à 5, comprenant des moyens de notification (106) configurés pour notifier l'état anormal ou le symptôme d'anomalie.

7. Appareil de climatisation selon la revendication 6, dans lequel l'unité de commande (101)
détecte une fréquence de fonctionnement de l'appareil de climatisation dans une période unitaire, et amène les moyens de notification (106) à notifier l'état anormal ou le symptôme d'anomalie lorsque la fréquence de fonctionnement est inférieure à une fréquence prédéterminée.

8. Appareil de climatisation selon l'une quelconque des revendications 1 à 7, comprenant une télécommande (105) configurée pour recevoir des informations de l'unité de commande (101) et afficher les informations, dans lequel
l'unité de commande (101)
transmet des informations prédéterminées définies à l'avance selon les données d'état de fonctionnement dans lesquelles l'état anormal ou le symptôme d'anomalie est détecté à la télécommande (105) lorsque l'état anormal ou le symptôme d'anomalie est détecté.

9. Appareil de climatisation selon la revendication 8, dans lequel une contre-mesure pour les états anormaux devant être prise par l'utilisateur, ou des informations sur l'effet du symptôme d'anomalie sur le fonctionnement sont définies comme les informations prédéterminées.
